# EUROPÄISCHE PATENTSCHRIFT

(11) **EP 1 319 454 B1**
(45) Veröffentlichungstag und Bekanntmachung des Hinweises auf die Patenterteilung: **20.02.2008**
(21) Anmeldenummer: 02027907.1
(22) Anmeldetag: 13.12.2002
(51) Int. Cl.: B23B 1/00, B23B 35/00, B23Q 11/10

(54) **Verfahren zur spanenden Bearbeitung von Werkstücken aus hochfesten Gusseisenwerkstoffen, insbesondere zum Spindeln von Zylinderbohrungen in Zylinderkurbelgehäusen**
Method of machining by chip-forming workpieces of high-strength cast iron in particular of boring cylinder bores in a cylinder block
Procédé d'usinage par enlèvement de copeaux des pièces de fonte grise à forte résistance en particulier d'alésage des cylindres dans un bloc-cylindres

(30) Priorität: 14.12.2001 DE 10161569
(43) Veröffentlichungstag der Anmeldung: 18.06.2003
(73) Patentinhaber: AUDI AG, 85045 Ingolstadt (DE); Ford Global Technologies, LLC, Dearborn, MI 48126 (US)
(72) Erfinder: Kassack, Johannes, Dr., 85049 Ingolstadt (DE); Robbins, Michael Leonard, Great Baddow, Chlemsford Essex CM2 8EP (GB); Reuter, Ulrich, Dr., 63825 Westerngrund (DE)
(74) Vertreter: Geissler, Manfred

(56) Entgegenhaltungen:
- EP-A- 0 559 328
- EP-A- 0 714 719
- DE-A- 19 626 608
- US-A- 5 103 701
- US-A- 5 607 264
- DATABASE WPI Section Ch, Week 199222 Derwent Publications Ltd., London, GB; Class M24, AN 1992-179503 XP002235328 & JP 04 115801 A (HITACHI METALS LTD), 16. April 1992 (1992-04-16)
- DATABASE WPI Section Ch, Week 198605 Derwent Publications Ltd., London, GB; Class M27, AN 1986-031512 XP002235329 & JP 60 251248 A (TOYOTA JIDOSHA KK), 11. Dezember 1985 (1985-12-11)
- KRESS D: "Dry Cutting with finish machining tools" INDUSTRIAL DIAMOND REVIEW, [Online] Bd. 57, Nr. 574, - 31. März 1997 (1997-03-31) XP002235326 Gefunden im Internet: <URL:http://www.equipment-news.com/magazin es/1998/jul1998/art05.htm> [gefunden am 2003-03-18]
- SANDVIK COROMANT: "Metal Working Products - Turning Tools" Februar 2000 (2000-02) , SANDVIK COROMANT UK , HALESOWEN, ENGLAND XP002235327 * Seite 6A - Seite 6B * * Seite 71A *
- PATENT ABSTRACTS OF JAPAN vol. 016, no. 013 (C-0901), 14. Januar 1992 (1992-01-14) -& JP 03 232973 A (DAIDO STEEL CO LTD), 16. Oktober 1991 (1991-10-16)

## Beschreibung

Die Erfindung betrifft ein Verfahren zur spanenden Bearbeitung von Werkstücken aus hochfesten Gusseisenwerkstoffen, insbesondere zum Spindeln von Zylinderbohrungen in Zylinderkurbelgehäusen nach dem Oberbegriff des Anspruchs 1. Ein Verfahren mit den Merkmalen des Oberbegriffes des Anspruchs 1 ist aus der JP 4-115801 (A) bekannt.

Zylinder-Kurbelgehäuse von Brennkraftmaschinen werden üblicherweise aus konventionellem Grauguss, d. h. aus Gusseisen mit Lamellengraphit (GG) hergestellt. Es ist bekannt, zum Spindeln im Schrupp- und Schlichtschnitt der Zylinderbohrungen in den Zylinderkurbelgehäusen aus GG Schneidwerkzeuge mit wenigstens einer einen polykristallinen Schneidstoff aufweisenden und geometrisch bestimmten Schneide zu verwenden, wobei die Bearbeitung im kontinuierlichen Schnitt, d. h. bei einem kontinuierlichen Schneideneingriff im Werkstück durchgeführt wird. Dabei wird ein Schneidstoff aus polykristallinem, kubischen Bornitrid (PCBN) eingesetzt. Bei der Bearbeitung wird zudem ein flüssiges Kühlschmiermittel zugeführt. Mit diesem Verfahren können hohe Schnittgeschwindigkeiten von ca. 800 m/min und damit eine hohe Produktivität realisiert werden, so dass das Verfahren für eine Großserienfertigung gut geeignet ist.

Ausgehend von diesen bekannten Verfahren für die Bearbeitung von Werkstücken aus GG mit einem polykristallinen Schneidstoff aus polykristallinem, kubischen Bornitrid wurde zur Einsparung von Kühlschmiermitteln eine Trockenbearbeitung ggf. in Verbindung mit einer Minimal-Mengen-Schmierung vorgeschlagen, wobei auf eine gezielte Kühlung verzichtet wird (S8 VDI-Nachrichten, 31. August 2001, Nr. 35).

Bei Gusseisenwerkstoffen zeigt sich allgemein der Trend, konventionelles Gusseisen mit Lamellengraphit (GG) durch Gusseisen mit Vermikulargraphit (GGV) oder Gusseisen mit Kugelgraphit (GGG) zu substituieren. GGV hat gegenüber dem herkömmlich verwendeten GG eine merklich höhere Festigkeit und bringt daher viele Vorteile hinsichtlich leichterer Konstruktionen mit geringeren Wandstärken. Insbesondere ergibt sich durch eine verschärfte Abgasgesetzgebung und die damit verbundenen notwendigen Erhöhungen der Zylinderdrücke sowie den allgemeinen Trend zum Leichtbau für die Konstruktion von Zylinderkurbelgehäusen für Verbrennungsmotoren die Notwendigkeit des Einsatzes höherfester Werkstoffe, so dass insbesondere hier eine Substitution von GG durch GGV oder auch GGG zweckmäßig ist.

Jedoch treten bei der spanenden Bearbeitung der Gusseisenwerkstoffe GGV oder GGG im Gegensatz zum konventionellen Grauguss GG im kontinuierlichen Schnitt, beispielsweise bei der Bearbeitung von Zylinderbohrungen in Zylinderkurbelgehäusen aus GGV oder GGG, erheblich reduzierte Werkzeugstandwege auf. Wenn bei der Bearbeitung von GGV oder GGG der gleiche Schneidstoff, aus polykristallinem, kubischen Bornitrit (PCBN) und gleiche übrige Bearbeitungsparameter wie bei der Bearbeitung von GG verwendet werden, hat sich gezeigt, dass die Werkzeugstandwege, d. h. die maximalen Werkzeugschnittwege im Vergleich auf 5 bis 10 % fallen. Die Werkzeugstandwege können zwar auf 20 bis 40 % der in Verbindung mit GG erreichbaren Werkzeugstandwege erhöht werden, indem die in Verbindung mit GG durchführbare Schnittgeschwindigkeit von ca. 800 m/min erheblich auf ca. 100 m/min verringert wird und ein Schneidstoff aus Hartmetall verwendet wird. Damit verringert sich jedoch die Produktivität um einen Faktor 8. Sowohl die verringerte Produktivität als auch die verringerten Werkzeugstandzeiten sind in der Großserienfertigung, insbesondere für das Spindeln und Schlichten von Zylinderbohrungen in Zylinder-Kurbelgehäuse nicht akzeptabel.

Es ist bekannt, bei Werkzeugmaschinen zum Kühlen eines Schneidwerkzeugs kalte Druckluft zu verwenden, welche mittels einer Lufteinblaseinrichtung zur Spindel und dem Schneidwerkzeug eingeblasen wird (DE 44 43 421 A1). Konkrete Angaben über verwendete Schneidstoffe und über Werkstoffe der zu bearbeitenden Werkstücke sind hier nicht gemacht.

Weiter sind Verfahren zur sog. Minimal-Mengen-Schmierung bei Zerspanprozessen bekannt (DE 19 617 752 A1, DE 19 915 265 A1), bei denen geringe Schmierstoffmengen in Verbindung mit Druckluft auf die Kontaktzone zwischen Schneide und Werkstück aufgebracht werden. Konkrete Angaben über verwendete Schneidstoffe und über Werkstoffe der zu bearbeitenden Werkstücke sind auch hier nicht angegeben.

Weiter ist ein Werkzeug für die spanende Materialbearbeitung mit einer Beschichtung aus einer haftfesten, polykristallinen Diamantschicht (PKD) bekannt (DE 19 629 456 C1). Angaben, welche Materialien mit diesem Werkzeug in welcher Weise bearbeitet werden sollen, sind nicht gemacht. Ein Schneidstoff aus polykristallinem Diamant (PKD) wird jedenfalls nach übereinstimmender Empfehlung der Schneidstoffhersteller aufgrund der hohen Affinität des Kohlenstoffs zum Eisen für eine Bearbeitung von Gusseisenwerkstoffen als nicht geeignet angesehen und daher für solche Bearbeitungen auch nicht eingesetzt.

Aufgabe der Erfindung ist es, ein Verfahren zur spanenden Bearbeitung von Werkstücken aus Gusseisenwerkstoffen, insbesondere zum Spindeln von Zylinderbohrungen in Zylinderkurbelgehäusen aus hochfesten Gusseisenwerkstoffen vorzuschlagen, mit dem relativ hohe Werkzeugstandwege und Schnittgeschwindigkeiten erreichbar sind.

Diese Aufgabe wird mit den Merkmalen des Anspruchs 1 gelöst.

Ausgehend von einem gattungsgemäßen Verfahren bestehen erfindungsgemäß die Schneidstoffe aus polykristallinem Diamant (PKD) und als Kühlmedium wird Druckluft verwendet, die zumindest an der Kontaktzone zwischen Schneide und Werkstück zur Schneidenkühlung aufgebracht wird.

Es hat sich völlig überraschend gezeigt, dass entgegen der Empfehlung der Schneidstoffhersteller für Schneidstoffe aus polykristallinem Diamant (PKD) und entgegen der herrschenden Meinung der Fachwelt ein Verfahren mit einer Kombination von einem Schneidstoff aus PKD und einer Kühlung mit dem Kühlmedium Druckluft, bei spanenden Bearbeitungen von hochfesten Gusseisenwerkstoffen, insbesondere von GGV und GGG zu einer im Vergleich zu den eingangs erwähnten Verfahren mit Hartmetall deutlich erhöhbaren Schnittgeschwindigkeit und damit deutlich erhöhten Produktivität bei gleichzeitig erheblich gesteigerten Werkzeugstandzeiten führt.

Gemäß Anspruch 2 kann dabei der Schneidstoff aus mittels physikalischer Prozesse hergestellter, polykristalliner Diamante (PKD) und/oder mittels chemischer Abscheideprozesse (chemical vapor deposition) hergestellter polykristalliner Diamante (CVD-PKD) bestehen.

Ein besonders bevorzugter Einsatzfall für das Verfahren besteht nach Anspruch 3 in der spanenden Bearbeitung von Gusseisenwerkstoffen mit Vermikulargraphit (GGV). Insbesondere eignet sich das Verfahren nach Anspruch 4 für GGV mit 70 bis 95 % Perlit und 0,005 bis 0,1 % Ti, wobei diese Gusseisensorte für die Herstellung von Zylinderkurbelgehäusen besonders geeignet ist.

Das Verfahren ist jedoch auch gut für die spanende Bearbeitung von Gusseisen mit Kugelgraphit (GGG) einsetzbar. Im Prinzip können mit dem Verfahren alle möglichen spanenden Bearbeitungen ausgeführt werden, bei denen jeweils eine geometrisch bestimmte Schneide im kontinuierlichen Schneideingriff im Werkzeug geführt ist.

Besonders geeignete Schneiden werden gemäß Anspruch 5 erhalten, wenn der polykristalline Diamantschneidstoff auf eine Hartmetallträgersubstanz aufgebracht ist.

Hohe Werkzeugstandzeiten in Verbindung mit relativ hohen Schnittgeschwindigkeiten sind nach Anspruch 6 erreichbar, wenn die Druckluft mit einem Druck von über 5 bar zugeführt wird. Zweckmäßige Drücke liegen je nach den Gegebenheiten bei 5 bis 8 bar oder ggf. auch noch höher. Nach Anspruch 7 kann der Druckluft auch eine geringe Ölmenge zugefügt werden. Wesentlich ist jedoch hier nicht eine an sich bekannte Minimal-Mengen-Schmierung sondern die zu Kühlzwecken mit hohem Druck zugeführte Druckluft.

In Verbindung mit guten Werkzeugstandzeiten sind Schnittgeschwindigkeiten nach Anspruch 8 bis ca. 250 m/min und ggf. höher realisierbar, d. h. es können wesentlich höhere Schnittgeschwindigkeiten als mit den bisher in Verbindung mit GGV angewendeten Verfahren erreicht werden.

Nach Anspruch 9 liegen geeignete Vorschübe (f) zwischen 0,1 und 0,4 mm.

Die Schnitttiefen (aₚ) können je nach den Gegebenheiten nach Anspruch 10 bevorzugt zwischen 0,01 und 0,25 mm betragen.

Ein geeigneter Eckenradius liegt gemäß Anspruch 11 zwischen 0,2 und 1,0 mm.

Mit Anspruch 12 ist der besonders bevorzugte Einsatzbereich des erfindungsgemäßen Verfahrens, nämlich als Großserienverfahren zum Spindeln und Schlichten von Zylinderbohrungen in Zylinderkurbelgehäusen aus GGV oder GGG beansprucht.

## Patentansprüche

1. Verfahren zur spanenden Bearbeitung von Werkstücken aus Gusseisenwerkstoffen, insbesondere zum Spindeln von Zylinderbohrungen in Zylinderkurbelgehäusen,
mit wenigstens einem Schneidwerkzeug mit wenigstes einer einen polykristallinen Schneidstoff aufweisenden und geometrisch bestimmten Schneide, wobei die Bearbeitung im kontinuierlichen Schnitt, d. h. bei einem kontinuierlichen Schneideneingriff im Werkstück durchgeführt wird, und
mit einer Zuführung von Kühlmedium während der Bearbeitung, wobei
als Kühlmedium Druckluft verwendet wird, die zumindest an der Kontaktzone zwischen Schneide und Werkstück zur Schneidenkühlung aufgebracht wird,
**dadurch gekennzeichnet,**
**dass** der Schneidstoff aus polykristallinem Diamant (PKD) besteht.

2. Verfahren nach Anspruch 1, **dadurch gekennzeichnet, dass** Schneidstoff aus mittels physikalischer Prozesse hergestellter polykristalliner Diamante (PKD) und/oder mittels chemischer Abscheideprozesse (chemical vapor deposition) hergestellter polykristalliner Diamante (CVD-PKD) besteht.

3. Verfahren nach Anspruch 1 oder Anspruch 2, **dadurch gekennzeichnet, dass** als Gusseisenwerkstoffe Gusseisen mit Vermikulargraphit (GGV) und/oder Gusseisen mit Kugelgraphit (GGG) verwendet sind.

4. Verfahren nach Anspruch 3, **dadurch gekennzeichnet, dass** als Gusseisenwerkstoff GGV mit 70 bis 95 % Perlit und 0,005 bis 0,1 % Ti eingesetzt wird.

5. Verfahren nach einem der Ansprüche 1 bis 4, dass der polykristalline Diamant-Schneidstoff auf eine Hartmetallträgersubstanz aufgebracht ist.

6. Verfahren nach einem der Ansprüche 1 bis 5, **dadurch gekennzeichnet, dass** die Druckluft mit einem Druck von über 5 bar zugeführt wird.

7. Verfahren nach einem der Ansprüche 1 bis 6, **dadurch gekennzeichnet, dass** die Druckluft durch Zusatz einer geringen Ölmenge ölhaltig ist.

8. Verfahren nach einem der Ansprüche 1 bis 7, **dadurch gekennzeichnet, dass** die Schnittgeschwindigkeiten bis ca. 250 m/min liegen.

9. Verfahren nach einem der Ansprüche 1 bis 8, **dadurch gekennzeichnet, dass** die Vorschübe (f) zwischen 0,1 und 0,4 mm liegen.

10. Verfahren nach einem der Ansprüche 1 bis 9, **dadurch gekennzeichnet, dass** die Schnitttiefen (aₚ) zwischen 0,01 und 0,25 mm betragen.

11. Verfahren nach einem der Ansprüche 1 bis 10, **dadurch gekennzeichnet, dass** der Eckenradius zwischen 0,2 und 1,0 mm liegt.

12. Verfahren nach einem der Ansprüche 1 bis 11, **dadurch gekennzeichnet, dass** das Verfahren ein Großserienverfahren zum Spindeln im Schrupp- und Schlichtschnitt von Zylinderbohrungen in Zylinderkurbelgehäusen aus GGV oder GGG ist.

## Claims

1. Method of machining by chip-forming workpieces of high-strength cast iron, in particular of boring cylinder bores in a cylinder block,
featuring at least one cutting tool which has at least one, geometrically defined cutting edge which incorporates a polycrystalline cutting material, the machining being performed in a continuous cutting action, i.e. the cutting edge(s) making a continuous incision in the workpiece, and
featuring a coolant feed during the machining process, the coolant used being compressed air which is applied at least at the contact zone between the cutting edge and the workpiece so as to cool down the cutting edge(s),
**characterised in that**
the cutting material comprises polycrystalline diamond (PCD).

2. Method according to claim 1, **characterised in that** the cutting material comprises polycrystalline diamond (PCD) produced by means of a physical process and/or polycrystalline diamond produced by means of a chemical vapour deposition process (CVD-PCD).

3. Method according to claim 1 or claim 2, **characterised in that** the cast iron materials used are vermicular graphite iron and/or nodular graphite iron.

4. Method according to claim 3, **characterised in that** GGV with 70 to 95% perlite and 0.005 to 0.1 % Ti is employed as the cast iron material.

5. Method according to any one of claims 1 to 4, **characterised in that** the polycrystalline diamond cutting material is applied to a hard metal carrier substance.

6. Method according to any one of claims 1 to 5, **characterised in that** the compressed air is supplied at a pressure above 5 bars.

7. Method according to any one of claims 1 to 6, **characterised in that** the compressed air contains oil thanks to the addition of a small quantity of oil.

8. Method according to any one of claims 1 to 7, **characterised in that** the cutting speeds are up to approx. 250 m/min.

9. Method according to any one of claims 1 to 8, **characterised in that** the forward feeds (f) are between 0.1 and 0.4 mm.

10. Method according to any one of claims 1 to 9, **characterised in that** the cutting depths (aₚ) are between 0.01 and 0.25 mm.

11. Method according to any one of claims 1 to 10, **characterised in that** the corner radius is between 0.2 and 1.0 mm.

12. Method according to any one of claim 1 to 11, **characterised in that** the method is a volume production method for boring cylinder bores by making roughing and smoothing incisions in cylinder blocks made from vermicular graphite iron or nodular graphite iron.

## Revendications

1. Procédé d'usinage par copeaux de pièces en fonte, destiné notamment à aléser des alésages de cylindre dans des bloc-cylindres,
comprenant au moins un outil de coupe doté d'au moins une lame comportant une matière de coupe polycristalline et définie géométriquement, l'usinage étant réalisé par coupe continue, c'est-à-dire au cours d'une mise en prise continue de la lame dans la pièce, et
comprenant une amenée de milieu réfrigérant pendant l'usinage, l'air comprimé étant utilisé comme milieu réfrigérant, lequel air est appliqué au moins sur la zone de contact entre la lame et la pièce pour refroidir la lame,
**caractérisé en ce que**
la matière de coupe est constituée de diamant polycristallin (DP).

2. Procédé selon la revendication 1, **caractérisé en ce que** la matière de coupe est constituée de diamants polycristallins (DP) fabriqués au moyen de processus physiques et/ou de diamants polycristallins (CVD-DP) fabriqués au moyen de processus de dépôt chimique en phase vapeur (chemical vapor deposition).

3. Procédé selon la revendication 1 ou la revendication 2, **caractérisé en ce que** de la fonte comprenant du graphite vermiculaire (GV) et/ou de la fonte comprenant du graphite sphéroïdal (GS) sont utilisées comme matériaux de fonte.

4. Procédé selon la revendication 3, **caractérisé en ce qu'**on utilise comme matériau de fonte du GV comprenant 70 à 95 % de perlite et 0,005 à 0,1 % de Ti.

5. Procédé selon l'une quelconque des revendications 1 à 4, **caractérisé en ce que** la matière de coupe en diamant polycristallin est appliquée sur une substance de support métallique dur.

6. Procédé selon l'une quelconque des revendications 1 à 5, **caractérisé en ce que** l'air comprimé est amené à une pression supérieure à 5 bar.

7. Procédé selon l'une quelconque des revendications 1 à 6, **caractérisé en ce que** l'air comprimé, par l'ajout d'une faible quantité d'huile, est oléagineux.

8. Procédé selon l'une quelconque des revendications 1 à 7, **caractérisé en ce que** les vitesses de coupe se situent dans la plage allant jusqu'à approximativement 250 m/min.

9. Procédé selon l'une quelconque des revendications 1 à 8, **caractérisé en ce que** les avancées (f) sont comprises entre 0,1 et 0,4 mm.

10. Procédé selon l'une quelconque des revendications 1 à 9, **caractérisé en ce que** les profondeurs de coupe (aₚ) mesurent entre 0,01 et 0,25 mm.

11. Procédé selon l'une quelconque des revendications 1 à 10, **caractérisé en ce que** le rayon de pointe est compris entre 0,2 et 1,0 mm.

12. Procédé selon l'une quelconque des revendications 1 à 11, **caractérisé en ce que** le procédé est un procédé en grande série destiné à aléser en coupe de dégrossissage et de finissage des alésages de cylindre dans des blocs-cylindres en GV ou GS.
